**Europäisches Patentamt**

**European Patent Office**

**Office européen des brevets**

(19)

(11) Veröffentlichungsnummer : **0 400 060 B1**

(12)

# EUROPÄISCHE PATENTSCHRIFT

(45) Veröffentlichungstag der Patentschrift :
**28.10.92 Patentblatt 92/44**

(51) Int. Cl.$^5$ : **F02M 59/44,** F02M 65/00, G01L 19/00

(21) Anmeldenummer : **89902747.8**

(22) Anmeldetag : **01.03.89**

(86) Internationale Anmeldenummer :
**PCT/DE89/00120**

(87) Internationale Veröffentlichungsnummer :
**WO 90/00680 25.01.90 Gazette 90/03**

(54) **MESSEINRICHTUNG ZUR ERFASSUNG EINES DRUCKES.**

(30) Priorität : **16.07.88 DE 3824239**

(43) Veröffentlichungstag der Anmeldung :
**05.12.90 Patentblatt 90/49**

(45) Bekanntmachung des Hinweises auf die
Patenterteilung :
**28.10.92 Patentblatt 92/44**

(84) Benannte Vertragsstaaten :
**DE FR GB IT**

(56) Entgegenhaltungen :
**DE-A- 291 556
DE-A- 2 638 785
FR-A- 2 350 591
GB-A- 2 109 476**

(73) Patentinhaber : **ROBERT BOSCH GMBH
Postfach 30 02 20
W-7000 Stuttgart 30 (DE)**

(72) Erfinder : **DOBLER, Klaus
Bettäckerstrasse 12
W-7016 Gerlingen (DE)**
Erfinder : **HEINZ, Rudolf
Eltinger Weg 26
W-7253 Renningen (DE)**
Erfinder : **WENDEL, Jürgen
Germersheimer Strasse 14
W-7000 Stuttgart 31 (DE)**

Jouve, 18, rue Saint-Denis, 75001 PARIS

## Beschreibung

### Stand der Technik

Die Erfindung geht aus von einer Meßeinrichtung nach der Gattung des Hauptanspruchs. Bei einer durch die EP-A 0 179 278 bekannten Meßeinrichtung steht ein Drucksensor direkt mit einem Druckraum, beispielsweise mit einem Pumpenarbeitsraum einer Kraftstoffeinspritzpumpe in Verbindung, um dort den Druckverlauf zu erfassen. Als Träger des Drucksensors dient dabei die das Medium begrenzende Wand, durch die der Drucksensor geschraubt ist. Weiterhin ist in diesem Stand der Technik offenbart, einen Drucksensor zu verwenden, der in einer Kraftstoffeinspritzeinrichtung anstelle einer Verschlußschraube eingesetzt werden kann, um so direkt den Druck im Pumpenarbeitsraum zu erfassen. Die Verschlußschraube kann dabei auch als Entlüftungsschraube ausgebildet sein. Nachteilig dabei ist, daß dann in der Fertigung oder beim Service der Kraftstoffeinspritzpumpe die Entlüftungsschraube ausgeschraubt und der Drucksensor eingeschraubt und nach der Messung der Drucksensor wieder gegen die Entlüftungsschraube getauscht werden muß, was jedesmal ein unerwünschtes Öffnen des Kraftstoffkreislaufs bedeutet und eine umständliche Handhabung darstellt.

Schließlich ist durch die EP-A 0 179 278 bekannt, den Drucksensor in einem separaten Träger zu lagern, der auf der druckabgewandten Seite an der das Medium begrenzenden Wand befestigt ist.

### Vorteile der Erfindung

Die erfindungsgemäße Meßeinrichtung mit den kennzeichnenden Merkmalen des Hauptanspruchs hat demgegenüber den Vorteil, daß bei der Druckmessung die Entlüftungsschraube in der Kraftstoffeinspritzpumpe verbleiben kann und der Kraftstoffkreislauf nicht geöffnet werden muß. Mit der Anlage des Drucksensors der Meßeinrichtung an den Kopf der Entlüftungsschraube in Richtung der Axialerstreckung der Entlüftungsschraube können die durch den Kompressionsdruck im Pumpenarbeitsraum verursachten minimalen Verformungen der Entlüftungsschraube auf den Drucksensor wirken und ein vom Druck abhängiges Meßsignal erzeugen. Durch die Zusammenfassung des Drucksensors mit einem Träger zu einer vormontierbaren Meßeinrichtung wird eine besonders kleine Baugröße der Meßeinrichtung erreicht, was bei den beengten Raumverhältnissen an der Kraftstoffeinspritzpumpe die Handhabung erleichtert.

### Zeichnung

Drei Ausführungsbeispiele der Erfindung sind in der Zeichnung dargestellt und in der nachfolgenden Beschreibung näher erläutert. Es zeigen Figur 1 einen partiellen Längsschnitt durch eine Kraftstoffeinspritzpumpe mit angebauter Meßeinrichtung, wobei im Anbauzustand der Drucksensor demontierbar ist, Figuren 2 und 3 Ausführungen, bei denen die Meßeinrichtung als Einheit vormontiert ist.

### Beschreibung der Ausführungsbeispiele

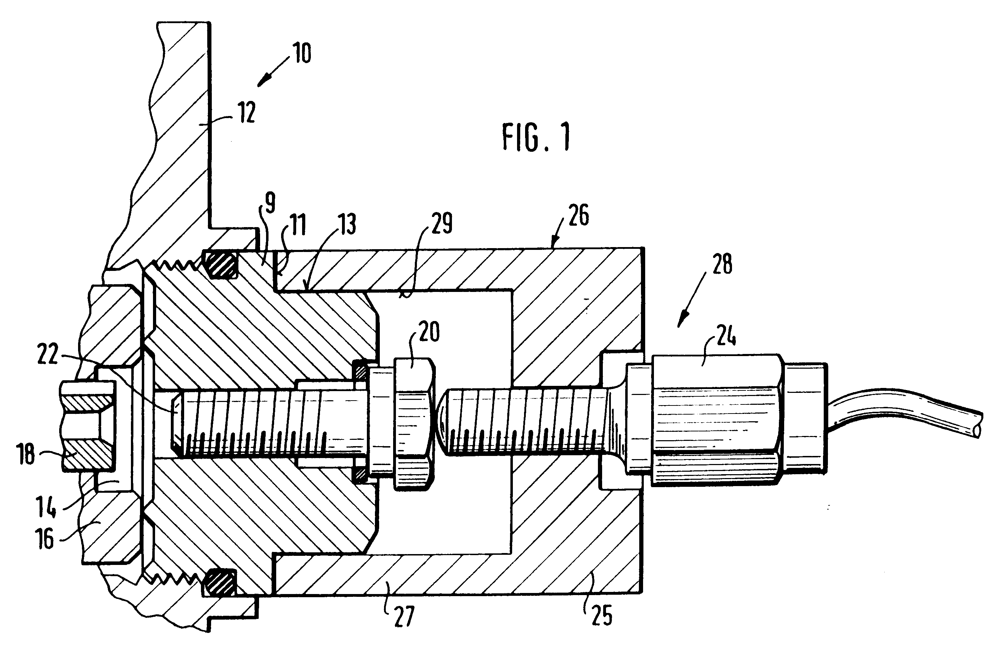

Die in Figur 1 ansatzweise und schematisch dargestellte an sich bekannte Kraftstoffeinspritzpumpe 10 weist ein Pumpengehäuse 12 auf, das eine Wandung bildet und einen Pumpenarbeitsraum 14 einschließt. Der Pumpenarbeitsraum 14 wird radial umschlossen durch einen Pumpenzylinder 16 und axial begrenzt auf der einen Stirnseite durch einen Pumpenkolben 18 und auf der anderen Stirnseite durch einen als Schraubeinsatz 9 ausgeführten Teil des Pumpengehäuses 12, der in diesem Bereich eine Verschlußschraube 20 aufweist, die mit ihrem Schaftende 22 zum Pumpenarbeitsraum 14 in Verbindung steht. In axialer Verlängerung des Pumpenzylinders 16 über die Verschlußschraube 20 hinaus ist ein Drucksensor 24 angebracht, der vorzugsweise zentrisch auf dem Kopf der Verschlußschraube 20 anliegt. Der Drucksensor 24 weist ein druckempfindliches Element auf, das sowohl in Dünnschicht- als auch in Dickschichttechnik ausgeführt sein kann und z. B. nach dem piezoresistiven oder piezoelektrischen Effekt arbeitet. Der Drucksensor 24 ist gehalten in einem Träger 26, der sich am Schraubeinsatz 9 abstützt. Drucksensor 24 und Träger 26 zusammen bilden eine Meßeinrichtung 28. Der Drucksensor 24 ist dabei zentrisch im Bodenteil 25 des topfförmig ausgestalteten Trägers 26 durch eine, eine Verstellung in Achsrichtung der Verschlußschraube 20 zulassende, starre lösbare Verbindung in form einer als Befestigungsgewinde ausgebildeten Verschraubung positioniert. Der Träger 26 positioniert sich mit seiner Wand in form einer Hülse 27 an einem Bund 11 des Schraubeneinsatzes 9 und ist durch den Preßsitz seiner Hülseninnenfläche 29 an einer anschließenden kreiszylinderförmigen Mantelfäche 13 des Pumpengehäuses 12 gegen Lageänderungen gesichert.

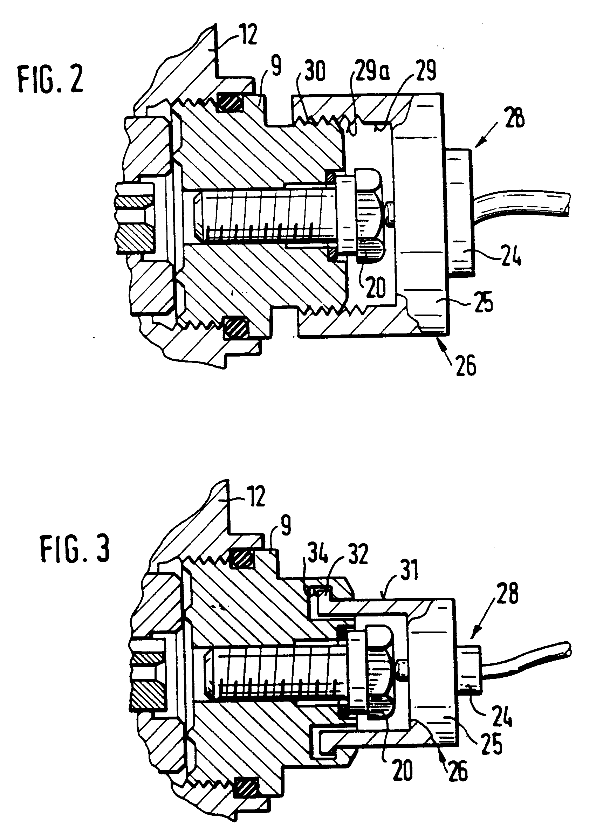

Davon abweichend zeigen die Ausführungsbeispiele nach Figur 2 und 3 zum einen anstelle der aufgeführten Preßverbindung eine Fixierung des Trägers 26 am Schraubeinsatz 9 über formschlüssige, lösbare Verbindungen, die eine Verstellung in Achsrichtung der Verschlußschraube 20 zulassen; zum anderen ist der Drucksensor 24 und das Bodenteil 25 des Trägers 26 zu einer Einheit zusammengefaßt.

In Figur 2 ist die lösbare Verbindung durch ein Befestigungsgewinde ausgeführt. Dabei tragen die Hülseninnenfläche 29 des Trägers 26 das Innengewinde 29a, die Mantelfläche 13 des Schraubeinsatzes 9 das entsprechende Außengewinde 30. Je nach Ausbildung des Anbauorts an Schraubeinsatz 9 kann die Befestigung des Träger 26 nach dem gleichen Prinzip in anderer Ausführung vorgenommen werden. Beispielsweise kann die Hülse 27 des Trägers 26 auch das Außengewinde und eine Ausnehmung des Schraubeneinsatzes 9 das Innengewinde tragen.

In Figur 3 ist die lösbare Verbindung zwischen Träger 26 und Schraubeinsatz 9 durch eine Renkverbindung vorgenommen. Gezeigt ist eine Renkverbindung mit Sicherung durch Formschluß. Dabei greifen von der Hülsenaußenfläche 31 des Trägers 26 an dem Bodenteil 25 angewandten Ende abstehende Erhöhungen 32, hier in Form von Backen mit rechteckigem Querschnitt, in im Pumpengehäuse 12 angebrachte, hier nutförmig ausgeführte Hinterschneidungen 34 ein. Neben dieser Verbindungsart kommen noch Renkverbindungen mit Sicherung durch Kraftschluß in Betracht.

Die vorstehend beschriebene Vorrichtung arbeitet folgendermaßen: Der Pumpenarbeitsraum 14, der auf nicht spezifizierte Weise mit Kraftstoff gefüllt ist, wird in seinem Volumen periodisch verändert durch die Bewegung des Pumpenkolbens 18. Die Bewegung des Pumpenkolbens 18 innerhalb eines Arbeitszyklus wird unterschieden in einen Saughub und einen Druckhub. Die Druckerfassung im Pumpenarbeitsraum 14 erfolgt durch die Anlage des Drucksensors 24 an der Verschlußschraube 20, deren minimale Verformungen durch den Druckaufbau im Pumpenarbeitsraum 14 ausreichen, den Drucksensor 24 auszusteuern und ein dem Druck im Pumpenarbeitsraum 14 proportionales Meßsignal zu generieren. Vorteilhaft für ein unverfälschtes Meßsignal ist die zentrale Krafteinleitung am Drucksensor 24 durch eine mit einer kleinen Erhöhung versehene oder ballig ausgeführte Kontaktstelle zwischen der Verschlußschraube 20 und dem Drucksensor 24.

Der beschriebene funktionsablauf ergibt folgenden Wirkungsablauf: Die periodischen volumenänderungen des kraftstoffgefüllten Pumpenarbeitsraumes 14 führen während der Druckhübe des Pumpenkolbens 18 zu einer Verdichtung des Kraftstoffes und zu einem Druckanstieg, bis, wie zeichnerisch nicht weiter dargestellt, der Öffnungsdruck eines mit dem Pumpenarbeitsraum 14 verbundenen Druckventils erreicht wird, dieses aufsteuert und die nachfolgende Einspritzdüse den nun unter hohem Druck stehenden Kraftstoff in einen Motorzylinder einspritzt, wo die für den Antrieb der von der Kraftstoffeinspritzpumpe 10 mit Kraftstoff versorgten Brennkraftmaschine notwendige Verbrennung stattfindet. Bei diesem Vorgang bildet die exakte Bestimmung des Einspritzbeginns und der Einspritzdauer die Voraussetzung für die genaue Mengenzuordnung und damit für den optimierten Betrieb der Brennkraftmaschine. Da Einspritzbeginn und Einspritzdauer druckabhängig gesteuert sind, ist die Druckerfassung im Pumpenarbeitsraum eng spezifiziert. Bei der Grundeinstellung der Kraftstoffeinspritzpumpe 10 in der Fertigung oder beim Service erfolgt die Ermittlung des Drucks im Pumpenarbeitsraum 14 über Drucksensoren 24, wobei erfindungsgemäß die Wirkung des Drucks auf die Verschlußschraube 20 genutzt wird. Die mit der Aussteuerung des Drucksensors 24 verbundene Signalabgabe kann dann in einer nachgeschalteten Auswerteelektronik für die den Druckaufbau in dem Pumpenarbeitsraum 14 bestimmenden Einstellvorgänge genutzt werden. Die vorstehenden Ausführungsbeispiele zeigen auf, daß mit der Anlage des Drucksensors 24 an den Kopf der Verschlußschraube 20 der Kompressionsdruck im Pumpenarbeitsraum 14 der Kraftstoffeinspritzpumpe 10 ohne unmittelbaren Zugang zum Pumpenarbeitsraum 14 und damit ohne Öffnung des Kraftstoffkreislaufs zu erfassen ist. Dabei ist der Drucksensor 24 in dem Träger 26 nach Figur 1 so gehalten, daß er auswechselbar ist, während er bei den Ausfürungen nach Figur 2 und 3 mit dem Träger 26 zu einer vormontierten Meßeinricbtung 28 zusammengefaßt ist und dadurch selbst in beengten Raumverhältnissen bei Abgleicharbeiten an der ersten Kraftstoffeinspritzpumpe 10 eingesetzt werden kann, insbesondere bei Verteilereinspritzpumpen von Kraftstoffeinspritzsystemen sowie bei der Verbrennungsdruckmessung in Diesel- oder Ottomotoren.

**Patentansprüche**

1. Meßeinrichtung (28) zur Erfassung eines Druckes eines von einer Wandung begrenzten Mediums, insbesondere die Erfassung des Druckes im Pumpenarbeitsraum (14) einer Kraftstoffeinspritzpumpe (10), mit einem an einem Träger (26) befestigten Drucksensor (24), wobei der Träger (26) auf der druckabgewandten Seite an der Wandung befestigt ist, dadurch gekennzeichnet, daß der Drucksensor (24) an einer außenliegenden Stirnfläche einer durch die Wandung geschraubten Verschlußschraube (20) anliegt.

2. Meßeinrichtung nach Anspruch 1, dadurch gekennzeichnet, daß der Pumpenzylinder (16) stirnseitig durch einen Schraubeinsatz (9) verschlossen ist, durch den die Verschlußschraube (20) als Entlüftungsschraube geschraubt ist.

3. Meßeinrichtung nach Anspruch 1 oder 2, dadurch gekennzeichnet, daß der Drucksensor (24) oder der Träger (26) in Achsrichtung der Verschlußschraube (20) einstellbar ist.

4. Meßeinrichtung nach einem der vorstehenden Ansprüche, dadurch gekennzeichnet, daß die Befestigung des Trägers (26) an der Wandung mittels einer lösbaren Verbindung (29, 30; 32, 34) hergestellt ist.

5. Meßeinrichtung nach Anspruch 4, dadurch gekennzeichnet, daß die Verbindung eine Verschraubung (29, 30) ist.

6. Meßeinrichtung nach Anspruch 4, dadurch gekennzeichnet, daß die Verbindung eine Renkverbindung (32, 34) ist.

7. Meßeinrichtung nach Anspruch 1, dadurch gekennzeichnet, daß der Drucksensor ein Dickschicht- oder Dünnschichtwiderstand ist, welcner unter Druckeinwirkung seine elektrischen Eigenschaften ändert.

## Claims

1. Measuring device (28) for sensing the pressure of a medium bounded by a wall, especially sensing the pressure in the pump working chamber (4) of a fuel injection pump (10), having a pressure sensor (24) attached to a support (26), the support (26) being attached to the wall on the side averted from the pressure, characterised in that the pressure sensor (24) bears on an outer-lying end face of a screw plug (20) screwed through the wall.

2. Measuring device according to Claim 1, characterised in that the pump cylinder (16) is closed at the end face by a screw insert (9), through which the screw plug (20) is screwed as a venting screw.

3. Measuring device according to Claim 1 or 2, characterised in that the pressure sensor (24) or the support (26) is adjustable in the axial direction of the screw plug (20).

4. Measuring device according to one of the preceding claims, characterised in that the attachment of the support (26) to the wall is done by means of a detachable connection (29, 30; 32, 34).

5. Measuring device according to Claim 4, characterised in that the connection is a threaded joint (29, 30).

6. Measuring device according to Claim 4, characterised in that the connection is a bayonet joint (32, 34).

7. Measuring device according to Claim 1, characterised in that the pressure sensor is a thick-film or thin-film resistor, which changes its electrical properties under the influence of pressure.

## Revendications

1) Installation de mesure (28) pour détecter une pression d'un fluide emprisonné dans une paroi notamment pour détecter la pression régnant dans la chambre de travail (14) d'une pompe d'injection de carburant (10), à l'aide d'un capteur de pression (24) fixé à un support (26), le support (26) étant lui-même fixé sur la paroi, du côté opposé à celui de la pression, installation caractérisée en ce que le capteur de pression (24) s'applique contre une surface frontale extérieure d'une vis d'obturation (20) vissée à travers la paroi.

2) Installation de mesure selon la revendication 1, caractérisée en ce que le cylindre (16) de la pompe est fermé du côté frontal par un insert vissé (9), à travers lequel est vissée la vis d'obturation (20) servant de vis de purge.

3) Installation de mesure selon la revendication 1 ou 2, caractérisée en ce que le capteur de pression (24) ou le support (26) est réglable dans la direction axiale de la vis d'obturation (20).

4) Installation de mesure selon l'une des revendications précédentes, caractérisée en ce que la fixation du support (26) sur la paroi est réalisée par une liaison amovible (29, 30 ; 32, 34).

5) Installation de mesure selon la revendication 4, caractérisé en ce que le moyen de liaison est une liaison vissée (29, 30).

6) Installation de mesure selon la revendication 4, caractérisée en ce que le moyen de liaison est un moyen de liaison de type baïonnette (32, 34).

7) Installation de mesure selon la revendication 1, caractérisée en ce que le capteur de pression est une résistance en couches épaisses ou en couches minces dont les caractéristiques électriques changent sous l'action de la pression.

FIG. 1

EP 0 400 060 B1

FIG. 2

FIG. 3